# EUROPEAN PATENT APPLICATION

(11) **EP 1 154 390 A2**
(43) Date of publication of application: **14.11.2001**
(21) Application number: 01650050.6
(22) Date of filing: 30.04.2001
(51) Int. Cl.: G09B 7/00, G06F 17/60

(54) **Computer-based training course**

(30) Priority: 08.05.2000 IE 000350
(71) Applicant: Intuition Publishing Limited, Dublin 1 (IE)
(72) Inventor: Mealy, Colm, Ardnore, Kilkenny (IE); Weafer, Eileen, Dublin 1 (IE); McShortall, Michelle, Dublin 9 (IE)
(74) Representative: Coyle, Philip Aidan

(57) **Abstract**

A computer-based training course comprises a first ("Orientate") module containing the objectives and outline content of the course and including a self-assessment test, a second ("Communicate") module containing the main information content of the course and including access to optional learning resources, and a third ("Evaluate") module containing a further self-assessment test. The materials constituting the training course are accessible interactively via a graphical user interface on the screen of a computer display device.

## Description

This invention relates to a computer-based training course, especially for adult learners.

According to the present invention there is provided a computer-based training course comprising a first module containing the objectives and outline content of the course and including a self-assessment test, a second module containing the main information content of the course and including access to optional learning resources, and a third module containing a further self-assessment test.

Preferably the course further includes a fourth module for testing the application of the knowledge learned in other modules; for example, by way of exercises, simulations and/or scenarios of real-life events or situations.

The course allows the student to access the modules in order, that is to say, first, second, fourth (if present) and third, or to jump randomly from one module to another.

"Computer-based" includes both the case where the materials constituting the training course are available locally at a PC or other intelligent device, for example on one or more CD ROMs, and the case where such materials are resident on a remote server and accessed remotely, for example over the internet, by a PC, dumb terminal, TV web access device or other remote access device.

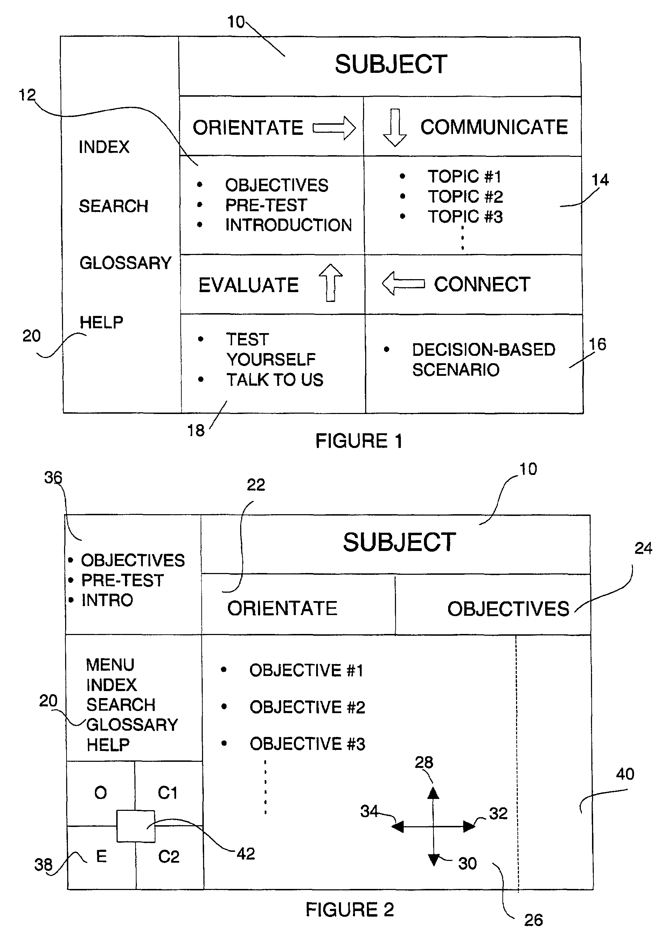

An embodiment of the present invention will now be described, by way of example, with reference to the Figs. 1 and 2 of the accompanying drawings which are simplified "screenshots" showing how the course material is presented on the screen of a computer display device at various stages of the course. It will be understood that the labels in the figures are generic, and will be replaced by text or other matter specific to the particular subject being taught. In the drawings the same reference numerals have been used for parts of the screen which serve the same function.

The course illustrated in the drawings is accessible interactively via a graphical user interface on the screen of the display device, and is based upon a four-module learning methodology designed specifically for adult learners. The methodology can be applied to any subject matter.

The four modules are referred to herein as:
Orientate
Communicate
Connect
Evaluate

Fig. 1 illustrates the layout of the startup screen of the course, herein called the "Menu" screen. The subject of the course is contained in a panel 10 across the top of the screen and this appears in all screens throughout the course. Below the panel 10 there are four panels 12, 14, 16 and 18 each headed by the name of a respective one of the four modules Orientate, Communicate, Connect and Evaluate. Within each panel 12 to 18 there is listed a description of the components of that module, as will be described below. Each listed component is implemented as a "hot spot" or hyperlink, meaning that by clicking on the component description the student is taken directly to the beginning of that component. Finally, on the left there is a vertical panel 20 with hyperlinks to a help facility, search engine, index, glossary, etc. This too is common to all screens throughout the course.

To start, and assuming that the student wants to go through the course in order, s/he clicks on (selects) the first listed component ("objectives") in the Orientate panel 12. This takes the student to the screen shown in Fig. 2.

Fig. 2 is the introductory screen for the Orientate module, and is representative of the screen layout which will appear when any component of any module is selected. In general, panel 22 will contain the name of the current module, panel 24 the name of the current component within that module, and panel 26 the course content of the selected component identified in the panel 24. Thus, in the present case, the panel 22 displays the module name "Orientate", the panel 24 displays the component name "Objectives" and the panel 26 displays a list of the actual objectives. In general, each module component is organised as a number of pages displayable individually in the panel 26, although this may not be necessary for components where only a small amount of material is to be presented. Vertical scroll arrows 28, 30 allow vertical scrolling of the page of text or other matter in the panel 26. A "Forward" arrow 32 allows the student to step forwardly to the next page of the current component, or to the first page of the next component if the current component is at an end. A "Back" arrow 34 allows the student to step backwardly to the immediately preceding page of the current component, or to the last page of the preceding component if the current component is at the beginning.

The Forward/Back arrows 32, 34 appear on every screen within each module, and allow the student to move stepwise through the course in order. In this context, the "order" of the course is the Orientate, Communicate, Connect and Evaluate modules in turn and, within each module, the components listed in panels 12 to 18 in order of listing. However, the screen shown in Fig. 2 also contains a "navigation" panel 36 containing hyperlinks to the components of the current module listed in order, and a "quick access" panel 38 containing hyperlinks to each module O (Orientate), C1 (Communicate), C2 (Connect) and E (Evaluate) and a hyperlink 42 to the Menu screen, Fig. 1. The hyperlinks within the panel 36 allow the student to move directly to any given component of the current module, while the hyperlinks in the panel 38 allow the student to move directly to the first component of any other module or to the Menu screen.

Finally, in addition to the hyperlinks "help", "search", "index", "glossary", etc., previously referred to, the panel 20 additionally contains a "Menu" hyperlink which if selected will take the student back to the Menu screen, Fig. 1.

In Fig. 2 a further panel 40 is shown divided off from the panel 26 by dashed lines. This panel 40 is specific to the Communicate module, and contains hyperlinks to a range of learning resources, as will be described.

The content of each module will now be described.

### ORIENTATE

Adult learners like to relate what they learn to their own situation and needs. The Orientate module provides learners with the context they require by setting out clearly what it is they will learn from the tutorial (the objectives), by allowing them to assess their current level of knowledge in this area (pre-test) and by outlining the scope of the content to come (introduction).

The Orientate module therefore contains the following components:
Objectives: Listing of learning objectives. There is normally one objective per topic.
Pre-test: Short pre-test of questions (between 5-10 questions reflecting topics in tutorial). Feedback that points/links into the tutorial topics.
Introduction: Motivational, interesting lead into the subject area.
Where experience shows there is a need, this module may also contain 'Trouble Spots' - a section which lists concepts learners often find problematic.

### COMMUNICATE

The Communicate module is the main source of tutorial information. The content itself is broken down into manageable learning chunks (topics) which lead on sequentially from one to the other. Each topic features text, images and a variety of different question types. Some topics also feature point and click exercises and animated sequences accompanied by voice over.

The Communicate module also contains a variety of supplemental learning tools, herein called Resources. These are accessed via hyperlinks in the right hand panel 40, Fig. 2, and are designed as both revision aids and as an extension of the learning (i.e. some resources cover non-essential but related content). When clicked on, they open in a separate window on top of the main window.

The list of Resources may include:
Process Flow - a flow chart of the procedure mentioned will open in the resource window. Some of these are animated. Users click on different decision points to follow the sequence.
Documentation Cue Card - this window holds an accurate copy of official documentation used in the specific circumstance mentioned, e.g. reconciliation forms (finance), patient charts (medical), etc.
Visual Diagram - this is a detailed diagram (often interactive) of something mentioned in the text. It will only appear in the Resource area if it is not core to the learning point being made onscreen.
In Short Cue Card - this is a short summary of the key points onscreen and is particularly useful as a revision tool.
Do You Know? - this is a short piece of relevant trivia designed to give background information on a key concept featured onscreen.
What do You Think? - these questions are designed to make the user think about their own situation. For instance, they can often ask about methods or procedures used in their own working environment. As they are directed at the user's own experience, they are not accompanied by an answer or feedback.
Word's Worth - this features the etymology of significant terms. Breaking them down into their component parts helps users internalise the information.
Remember It - this is essentially a mnemonic - a memory aid designed to help users remember the steps in a procedure or the components of an element.
Go Do - these are exercises which users complete away from the computer - familiarising themselves with procedures used in their own workplace or carrying out research, etc.
Other resources may include Audio Extracts, Video Extracts and 3D Animations.

### CONNECT

The CONNECT module is practice oriented. Its purpose is to get users to apply the concepts they've learned from the tutorial to real life situations. (The Connect module is not appropriate for all tutorials and in such case may be omitted). Therefore, the Connect module tests the application of the knowledge learned in other modules and contains, for example, exercises, simulations and/or scenarios of real-life events or situations.

The Connect module may feature any of three types of simulation:

### Decision-based Scenario

This describes a particular situation, presents users with several different courses of action and asks them to decide. Each decision they make has an associated consequence and brings them to a new set of options from which to choose. There is however, a preferred path through the scenario which can only be followed if the user answers correctly.

### Process Scenario

The Process Scenario brings a user through a specific sequence, for example a surgical procedure, assembling a piece of machinery or the process of reconciling financial transactions. These processes are characterised by the fact that they have a set number of steps and an order in which things should proceed. This scenario-type tests users' knowledge of these steps and helps them to internalise the information by practicing until they have it right.

### Interactive Case Study

This involves giving the user an objective and a certain amount of information. Users are then given access to further information, but they must choose what type of information they want and they must be able to analyse that information properly before moving on.

### EVALUATE

This final module has two components:
Test Yourself
Talk to Us

The Test Yourself component is a test usually comprising around eight questions (depending on the size of the tutorial). This test is scored and remedial feedback is provided on the final screen.

Because adult learners like to have their opinions heard, the module incorporates a Talk to Us option which allows them to feed back their comments and ideas through email. The product can then be further refined to take on board these ideas.

The advantage of the course structure described above is its flexibility. Adult learners need a flexible learning model. They like to access content in different ways and they expect to move quickly and easily from one area to another. The course's overall structure is designed with this in mind.

Those who learn best in a structured environment will follow the phased approach, completing each component in turn in the Orientate module before moving on to the Communicate module, then the Connect module and finally the Evaluate module.

More independent learners are free to start learning wherever they choose. The left hand navigation panel 36 gives them one-click access to the other sections in a module, while the quick access panel 38 gives them one-click access to the other modules.

Performance-oriented users may just want to access the tests while the hands-on learner can go directly to the scenario-based Connect module.

The course's explicit layout (showing each module and its component parts) facilitates the adult student no matter what his preference.

As well as facilitating different modes of access, the course also facilitates different modes of learning.

There is a range of different learner types - visual learners, who need to see an image before they get the concept, auditory learners who get more from the spoken word than from any other medium, and collaborative learners who learn best in groups and so on.

The course's combination of theory (Communicate), practice (Connect) and performance (Evaluate) coupled with its varied use of media, interactive techniques and collaborative elements, make it an immensely powerful learning tool with universal appeal.

The invention is not limited to the embodiments described herein which may be modified or varied without departing from the scope of the invention.

## Claims

1. A computer-based training course comprising a first module containing the objectives and outline content of the course and including a self-assessment test, a second module containing the main information content of the course and including access to optional learning resources, and a third module containing a further self-assessment test.

2. A training course as claimed in claim 1, further including a fourth module for testing the application of the knowledge learned in other modules.

3. A training course as claimed in claim 2, wherein the fourth module includes exercises, simulations and/or scenarios of real-life events or situations.

4. A training course as claimed in claim 1, wherein the materials constituting the training course are accessible interactively via a graphical user interface on the screen of a computer display device.

5. A training course as claimed in claim 5, wherein the materials constituting the training course are resident on a remote server and accessed remotely over the internet.

6. A training course as claimed in claim 4, wherein each module comprises a plurality of components, and wherein when any component of a module is being viewed the screen includes links which take the user directly to the beginning of any other component of that module.

7. A training course as claimed in claim 6, wherein when any component of a module is being viewed the screen also contains links which take the user directly to the beginning of any other module.

8. A training course as claimed in claim 4, wherein each module comprises a plurality of components, wherein at least some components comprise a plurality of pages, and wherein for each component comprising a plurality of pages the screen includes means for moving forwards and backwards through said pages.
